# EUROPÄISCHE PATENTANMELDUNG

(11) **EP 4 471 377 A1**
(43) Veröffentlichungstag der Anmeldung: **04.12.2024**
(21) Anmeldenummer: 23176407.7
(22) Anmeldetag: 31.05.2023
(51) Int. Cl.: G01C 21/16, G01S 17/04, G01S 17/42, G01S 17/931

(54) **SENSORANORDNUNG**

(71) Anmelder: Leuze electronic GmbH + Co. KG, 73277 Owen/Teck (DE)
(72) Erfinder: Feller, Bernhard, 86316 Friedberg (DE); Mielchen, Alexander, 72768 Reutlingen (DE); Wursthorn, Viktor, 72636 Frickenhausen (DE); Schreiber, Frank, 72574 Bad Urach (DE); Sanzi, Dr., Friedrich, 73230 Kirchheim/Teck (DE)
(74) Vertreter: Ruckh, Rainer Gerhard

(57) **Zusammenfassung**

Die Erfindung betrifft eine Sensoranordnung (1) mit einem an einer beweglichen Einheit (2) angeordneten Sicherheitsdistanzsensor (4), mittels dessen eine Schutzfeldüberwachung durchgeführt wird. An der beweglichen Einheit (2) ist ein Beschleunigungssensor (5) angeordnet, wobei abhängig von Beschleunigungssignalen des Beschleunigungssensors (5) oder daraus abgeleiteten Größen eine Vorgabe von Schutzfeldern (7, 7') für die Schutzfeldüberwachung des Sicherheitsdistanzsensors (4) erfolgt und/oder eine Analyse oder Kontrolle der beweglichen Einheit durchgeführt wird. Ein Fahrzeug (2) weist zwei nicht gelenkte Räder (3a) und ein gelenktes Rad (3b) auf. Mit d ist der Abstand des Beschleunigungssensors (5) zum gedachten Drehpunkt (P) bei einer Kurvenfahrt des Fahrzeugs (2) bezeichnet. Der Sicherheitsdistanzsensor (4) und der Beschleunigungssensor (5) sind in einem Sensorgehäuse (6) integriert. Der Beschleunigungssensor ist vorteilhaft als dreiachsiger Beschleunigungssensor ausgebildet, mit dem Beschleunigungen in allen drei Raumrichtungen erfasst werden können. Im Sicherheitsdistanzsensor können applikationsspezifische Sonderfälle für die Berechnung oder Vorgabe des Schutzfelds hinterlegt sein. In der Rechnereinheit können anhand der Beschleunigungssignale des Beschleunigungssensors Schock-und/oder Vibrationsdaten der beweglichen Einheit ermittelt werden. Anhand bestimmter Schock- und/oder Vibrationsdaten bei einem Fahrzeug können Informationen über die Bodenbeschaffenheit des Bodens, auf dem das Fahrzeug fährt, ermittelt werden. Speziell können dabei Landmarken in Form lokaler Erhöhungen des Bodens detektiert werden, da diese definierte Schock- oder Vibrationsprofile generieren. Werden zudem die Positionen der Landmarken oder anderer Markierungen bestimmt, können diese einem Navigationssystem des Fahrzeugs zur Verfügung gestellt werden.

## Beschreibung

Die Erfindung betrifft eine Sensoranordnung.

Derartige Sensoranordnungen werden insbesondere zur Gefahrenbereichsüberwachung an gefahrbringenden Anlagen eingesetzt. Insbesondere kann die Anlage von einem Fahrzeug gebildet sein, wobei dann als Gefahrenbereich das Umfeld des Fahrzeugs überwacht wird. Ein Gefahrenbereich an einer solchen Anlage wird beispielsweise mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Sensoranordnungen werden scannende optische Sensoren derart eingesetzt, dass mit diesen eine Objektüberwachung nicht im gesamten Überwachungsbereich, sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet oder nicht.

Dieses Objektfeststellungsignal wird an eine Steuerung ausgegeben, die die Anlage, insbesondere das Fahrzeug, steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Abhängig von der jeweiligen Applikation oder auch abhängig vom Betriebszustand der Anlage kann es erforderlich sein, die Gefahrenbereichsüberwachung anzupassen. Dies gilt insbesondere für Fahrzeuge, da sich dort bei der Fahrt des Fahrzeugs laufend andere Umgebungsbedingungen ergeben. In derartigen Fällen sind im optischen Sensor unterschiedliche Schutzfelder abgespeichert, wobei je nach Anforderung das am besten geeignete Schutzfeld aktiviert wird.

Nachteilig hierbei ist zum einen, dass die Schutzfelder vorab konfiguriert sein müssen, damit diese ausgewählt werden können. Dies ist insbesondere dann aufwändig, wenn eine Vielzahl von Schutzfeldern zur Anpassung in unterschiedliche Umgebungsbedingungen benötigt wird.

Ein weiterer wesentlicher Nachteil besteht darin, dass die Auswahl durch externe Einheiten erfolgt, wie z.B. einer Steuerung, insbesondere einer Fahrzeugsteuerung. Hierzu ist einerseits ein erheblicher konstruktiver Zusatzaufwand erforderlich. Insbesondere wird der Hardware- und Softwareaufwand der Steuerung erhöht.

Zudem muss in sicherheitstechnischen Applikationen die Auswahl der Schutzfelder fehlersicher erfolgen. Insbesondere ist eine Verifikation von ausgewählten Schutzfeldern erforderlich. Dies erhöht den Aufwand in der Steuerung und auch den Aufwand der Kommunikation zwischen Sensor und Steuerung. Zudem ist dadurch für die Auswahl der Schutzfelder ein erheblicher Zusatzaufwand, bedingt durch einen hohen Rechenaufwand, erforderlich.

Der Erfindung liegt die Aufgabe zugrunde eine Sensoranordnung bereitzustellen, die eine sichere und schnelle Anpassung einer Schutzfeldüberwachung an sich veränderte Applikationsbedingungen gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem an einer beweglichen Einheit angeordneten Sicherheitsdistanzsensor, mittels dessen eine Schutzfeldüberwachung durchgeführt wird. An der beweglichen Einheit ist ein Beschleunigungssensor angeordnet, wobei abhängig von Beschleunigungssignalen des Beschleunigungssensors oder daraus abgeleiteten Größen eine Vorgabe von Schutzfeldern für die Schutzfeldüberwachung des Sicherheitsdistanzsensors erfolgt und/oder eine Analyse oder Kontrolle der beweglichen Einheit durchgeführt wird.

Die Erfindung betrifft weiterhin ein Verfahren zum Betrieb einer derartigen Sensoranordnung.

Die erfindungsgemäße Sensoranordnung weist einen Sicherheitsdistanzsensor auf. Der Sicherheitsdistanzsensor weist Sensorkomponenten auf, die für eine Distanzmessung ausgebildet sind, wobei diese vorteilhaft nach einem Impuls-Laufzeit-Verfahren oder nach einem Phasenmessverfahren erfolgen kann. Vorteilhaft ist der Sicherheitsdistanzsensor als optischer Sensor ausgebildet. Dann weist der Sicherheitsdistanzsensor als Sensorkomponenten eine Lichtstrahlen emittierende Sendeeinheit und eine Lichtstrahlen empfangende Empfangseinheit auf. Zur Bestimmung der Distanz eines Objekts wird die Lichtlaufzeit der Lichtstrahlen von der Sendeeinheit vom Objekt und zurück zur Empfangseinheit ausgewertet. Hierzu ist eine Auswerteeinheit vorgesehen, in welcher Sensorsignale der Sensorkomponenten ausgewertet werden. Für den Einsatz im Bereich der Sicherheitstechnik weist die Auswerteeinheit vorteilhaft einen fehlersicheren Aufbau auf, beispielsweise in Form zweier sich gegenseitig überwachender Rechnereinheiten.

Die erfindungsgemäße Sensoranordnung kann in sicherheitstechnischen Applikationen, insbesondere im Bereich des Personenschutzes eingesetzt werden und erfüllt hierzu die geltenden normativen Anforderungen.

Der Sicherheitsdistanzsensor bildet die zentrale sicherheitstechnische Komponente der Sensoranordnung. Generell können mit dem Sicherheitsdistanzsensor Objekte innerhalb eines Erfassungsbereichs erfasst werden. Erfindungsgemäß ist die Überwachungsfunktion des Sicherheitsdistanzsensors derart ausgebildet, dass ein Schutzfeld innerhalb des Erfassungsbereichs überwacht wird. Wird mit dem Sicherheitsdistanzsensor ein Objekteingriff im Schutzfeld detektiert, insbesondere ein Eindringen eines sicherheitskritischen Objekts, wie z.B. einer Person, generiert der Sicherheitsdistanzsensor ein entsprechendes Objektfeststellungssignal, das zum Auslösen einer Sicherheitsfunktion führt.

Die erfindungsgemäße Sensoranordnung ist derart ausgebildet, dass der Sicherheitsdistanzsensor an einer beweglichen Einheit angeordnet ist, deren Vorfeld oder Umfeld mit dem Sicherheitsdistanzsensor überwacht wird.

Die bewegliche Einheit kann ein bewegliches Anlagenteil oder Maschinenteil sein. Weiterhin kann die bewegliche Einheit ein Fahrzeug sein, wie z.B. ein FTS (fahrerloses Transportsystem).

Erfindungsgemäß wird im Sicherheitsdistanzsensor selbst abhängig vom Bewegungszustand der beweglichen Einheit und damit angepasst an die aktuellen Applikationsbedingungen ein Schutzfeld aktiviert, innerhalb dessen mit dem Sicherheitsdistanzsensor eine Schutzfeldüberwachung durchgeführt wird.

Erfindungsgemäß weist hierzu die Sensoranordnung neben dem Sicherheitssensor einen Beschleunigungssensor auf, mit dem der aktuelle Bewegungszustand der beweglichen Einheit erfasst wird.

Der Beschleunigungssensor ist vorteilhaft als dreiachsiger Beschleunigungssensor ausgebildet, mit dem Beschleunigungen in allen drei Raumrichtungen erfasst werden können.

Aus den Beschleunigungssignalen werden Größen abgeleitet, nämlich die Geschwindigkeit der beweglichen Einheit durch einmaliges Integrieren des Beschleunigungssignals und ein Wegsignal für die bewegliche Einheit durch zweimaliges Integrieren der Beschleunigungssignale. Zudem ergibt sich bei Verwendung eines dreiachsigen Beschleunigungssensors auch die Bewegungsrichtung der beweglichen Einheit.

Mit dem Beschleunigungssignal des Beschleunigungssensors und den davon abgeleiteten Größen wird der Bewegungszustand fortlaufend erfasst. Abhängig hiervon erfolgt im Sicherheitsdistanzsensor die Vorgabe, d.h. Aktivierung von Schutzfeldern.

Gemäß einer ersten Variante wird im Sicherheitsdistanzsensor das jeweilige Schutzfeld aus den ermittelten Sensorsignalen und daraus abgeleiteten Bewegungsgrößen berechnet. Die Form und Größe des Schutzfelds können bei der Berechnung frei vorgegeben und an die Größen in den Datensätzen angepasst werden. Damit können prinzipiell beliebige und beliebig viele Schutzfelder generiert werden. Die Berechnung des Schutzfelds erfolgt vorteilhaft mit einer Rechenvorschrift, d.h. einem Algorithmus, der den Anforderungen geltender sicherheitsrelevanter Normen entspricht, so dass auch diesbezüglich eine fehlersichere Generierung eines Schutzfelds gewährleistet ist.

Gemäß einer vorteilhaften Weiterbildung können im Sicherheitsdistanzsensor applikationsspezifische Sonderfälle für die Berechnung oder Vorgabe des Schutzfelds hinterlegt sein. Ein Beispiel hierfür ist eine bewegliche Einheit in Form eines Fahrzeugs, das durch Lagergassen oder dergleichen führt. Dann können Restriktionen für die Berechnung oder Vorgabe der Schutzfelder derart hinterlegt sein, dass die Schutzfeld-Konturen seitlich derart begrenzt werden, dass stationäre Gegenstände, die die Lagergasse seitlich begrenzen, nicht vom Schutzfeld erfasst werden.

Schließlich können zur Dimensionierung von zu aktivierenden Schutzfeldern auch Kenngrößen der beweglichen Einheit verwendet werden, wie z.B. Dimension der beweglichen Einheit und Beschleunigungs- und Bremsverhalten der beweglichen Einheit.

Gemäß einer zweiten Variante sind im Sicherheitsdistanzsensor mehrere Schutzfelder hinterlegt, wobei jedes Schutzfeld einem bestimmten Satz von Bewegungsgrößen der beweglichen Einheit zugeordnet ist. Diese Zuordnung ist als zweidimensionales Kennlinienfeld in dem Sicherheitsdistanzsensor hinterlegt.

Je nach aktuellem Bewegungszustand der beweglichen Einheit kann dann anhand des Kennlinienfelds das passende Schutzfeld ausgewählt werden.

Dabei muss nicht mit jeder Änderung des Bewegungszustands der beweglichen Einheit das Schutzfeld geändert werden. Vorteilhaft werden die Bewegungszustände der beweglichen Einheit klassifiziert und es erfolgt eine Schutzfeld-Umschaltung nur bei signifikanten Änderungen des Bewegungszustands der beweglichen Einheit.

Um eine fehlersichere Vergabe und Auswahl der Schutzfelder zu gewährleisten, werden die Beschleunigungssignale und die daraus abgeleiteten Größen mit entsprechenden, hierzu äquivalenten Größen verglichen, die mit einem weiteren, anderen Sensor bestimmt werden.

Besonders vorteilhaft ist der weitere Sensor vom Sicherheitsdistanzsensor der Sensoranordnung gebildet. Aus den Distanzwerten des Sicherheitsdistanzsensors können Weglängen bestimmt werden. Durch eine differentielle und richtungsabhängige Auswertung der Distanzwerte können die Geschwindigkeit und Bewegungsrichtung der beweglichen Einheit bestimmt werden.

Alternativ ist es möglich, als weiteren Sensor wenigstens einen Zusatzsensor einzusetzen. Beispiele hierfür sind inkrementelle induktive Wegsensoren. Besonders vorteilhaft ist der weitere Sensor ein zweiter Beschleunigungssensor.

Generell können mit dem zweiten Beschleunigungssensor Beschleunigungssignale und daraus abgeleitete Größen des ersten Beschleunigungssensors verifiziert und plausibilisiert werden.

Je nach Ausbildung des Sicherheitsdistanzsensors erfolgt mit diesem eine Objekterfassung innerhalb eines zwei- oder dreidimensionalen Erfassungsbereichs. Dementsprechend können auch die Schutzfelder zwei- oder dreidimensionale Bereiche bilden.

Beispiele für derartige unterschiedliche Sicherheitsdistanzsensoren sind optische Sensoren in Form von Flächendistanzsensoren oder Kamerasensoren. Während mit Flächendistanzsensoren eine Objektdetektion in einem zweidimensionalen Erfassungsbereichs erfolgt, kann mit einem Kamerasensor ein dreidimensionaler Erfassungsbereich erfasst werden.

Bei der Integration der Beschleunigungswerte ergibt sich bei den so erhaltenen Geschwindigkeiten ein Offset-Fehler durch die Integrationskonstante. Entsprechendes gilt bei einer weiteren Integration der Beschleunigungssignale, um ein Wegsignal zu erhalten. Dieser Offset-Fehler kann durch geeignete Korrekturmaßnahmen eliminiert werden. Beispielsweise kann ein Hilfsintegrator eingesetzt werden, der bei konstanter Geschwindigkeit oder Stillstand der beweglichen Einheit das Integral über den Offset des integrierten Beschleunigungssignals bildet.

Alternativ kann der Integrationsfehler anhand vorbekannter Beschleunigungsphasen ermittelt werden. Ein Spezialfall ist der Stillstand der beweglichen Einheit, nachdem der Sicherheitsdistanzsensor eine Sicherheitsfunktion ausgelöst hat.

Erfindungsgemäß können die Beschleunigungssignale des Beschleunigungssensors und daraus abgeleitete Größen nicht nur zur Vorgabe von Schutzfeldern für eine Schutzfeldüberwachung des Sicherheitsdistanzsensors genutzt werden. Alternativ oder zusätzlich können diese Größen für eine Analyse oder Kontrolle der beweglichen Einheit genutzt werden.

Die entsprechende Auswertung dieser Größen erfolgt vorteilhaft in einer Rechnereinheit, die im Sicherheitsdistanzsensor integriert sein kann oder eine hierzu separate Einheit bildet. Die dabei erhaltenen Ergebnisse können über eine Kommunikationsschnittstelle an eine externe Einheit ausgegeben werden, insbesondere an eine Steuerung, die die bewegliche Einheit steuert. Ist die bewegliche Einheit ein Fahrzeug, bildet die Steuerung die Fahrzeugsteuerung für das Fahrzeug.

Die Kommunikationsschnittstelle kann eine sichere oder nicht sichere Schnittstelle bilden, über die Werte fehlersicher oder nicht fehlersicher ausgegeben werden können. Beispiel für derartige Kommunikationsschnittstellen sind Ethernet-Schnittstellen, wie z.B. TCP/IP, UDP oder OPC/UA oder sichere oder nicht sichere Feldbussysteme, wie z.B. Profinet, Profisafe, Ethercat oder FSOE.

Gemäß einer vorteilhaften Ausführungsform werden in der Rechnereinheit anhand der Beschleunigungssignale des Beschleunigungssensors Schock- und/oder Vibrationsdaten der beweglichen Einheit ermittelt.

Vorteilhaft werden die Schock- und Vibrationsdaten mittels einer Frequenzanalyse der Beschleunigungssignale des Beschleunigungssensors bzw. der daraus abgeleiteten Größen gewonnen.

In der Rechnereinheit erfolgt eine Analyse, insbesondere Klassifizierung der Schock- und Vibrationsdaten. Anhand dieser Auswertungen können spezielle Schock- bzw. Vibrationsdaten identifiziert werden.

Zunächst können aus den Messdaten des Beschleunigungssensors Schock- und/oder Vibrationsanteile ausgefiltert werden.

Zur Filterung der Schock- und Vibrationsanteile können in der Rechnereinheit geeignete Filter, wie z. B. Kerbfilter für Störsignalanteile oder Bandpass- oder Tiefpassfilter für Nutzsignale, vorgesehen sein.

Weiterhin ist es möglich, dass aus den Schock- und/oder Vibrationsdaten Kenngrößen für die bewegliche Einheit abgeleitet werden.

Insbesondere kann dadurch eine konstruktive Verbesserung der beweglichen Einheit zur Erzielung oder Anpassung der beweglichen Einheit an die jeweiligen Applikationen erzielt werden. Bei einer als Fahrzeug ausgebildeten beweglichen Einheit können z.B. Verbesserungen oder Anpassungen der Federung, Dämpfung oder der Stabilität der Befestigung von Komponenten an dem Fahrzeug ermittelt werden.

Weiterhin ist es möglich, anhand der bestimmten Schock- und/oder Vibrationsdaten bei einer beweglichen Einheit in Form eines Fahrzeugs Informationen über die Bodenbeschaffenheit des Bodens, auf dem das Fahrzeug fährt, zu ermitteln.

Speziell können dabei Landmarken in Form lokaler Erhöhungen des Bodens detektiert werden, da diese definierte Schock- oder Vibrationsprofile generieren. Werden zudem die Positionen der Landmarken oder anderer Markierungen bestimmt, können diese einem Navigationssystem des Fahrzeugs zur Verfügung gestellt werden.

Weiterhin ist es möglich, dass anhand von Beschleunigungssignalen des Beschleunigungssensors oder daraus abgeleiteten Größen eine Montagekontrolle oder Verschleißkontrolle durchgeführt wird.

Insbesondere durch Bestimmungen von Abweichungen der aktuellen Beschleunigungsrichtung bezüglich des Schwerkraftsensors kann ermittelt werden, ob die Position des Sicherheitsdistanzsensors, in dem der Beschleunigungssensor integriert ist, an der beweglichen Einheit korrekt ist oder nicht.

Weiterhin können aus Größen, wie z.B. der Bremsverzögerung eines Fahrzeugs, Fehlfunktionen der entsprechenden Fahrzeugkomponenten, insbesondere deren Verschleiß, festgestellt werden.

Weiterhin ist es möglich anhand von Beschleunigungssignalen des Beschleunigungssensors oder daraus abgeleiteten Größen eine Kollisionserkennung für die bewegliche Einheit durchzuführen.

Insbesondere können damit Kollisionen, die mit dem Sicherheitsdistanzsensor nicht erfasst werden können, anhand anormaler Beschleunigungsprofile ermittelt werden.

Schließlich können anhand von Beschleunigungssignalen des Beschleunigungssensors oder daraus abgeleiteten Größen Rampenfahrten der beweglichen Einheit erkannt und dadurch bedingte Schutzfeld-Verletzungen plausibilisiert werden.

Durch Erfassen plötzlicher Beschleunigungen kann diesem eine Schutzfeld-Verletzung zugeordnet werden, die nicht durch Eintritt eines Objekts in das Schutzfeld, sondern durch eine derartige Störung verursacht werden. Dadurch kann das Auslösen unnötiger Sicherheitsfunktionen des Sicherheitsdistanzsensors vermieden werden, wodurch die Verfügbarkeit der beweglichen Einheit erhöht wird.

Die Erfindung wird im Folgenden anhand der Zeichnungen erläutert. Es zeigen:
- Figur 1:: Ausführungsbeispiel der erfindungsgemäßen Sensoranordnung an einem Fahrzeug.
- Figur 2:: Blockschaltbild der Sensoranordnung gemäß Figur 1.
- Figur 3:: Erstes Beispiel eines Sicherheitsdistanzsensors in Form eines Flächendistanzsensors.
- Figur 4:: Zweites Beispiel eines Sicherheitsdistanzsensors in Form eines Flächendistanzsensors.
- Figur 5:: Beispiel eines Sicherheitsdistanzsensors in Form eines Kamerasensors.
- Figur 6:: Blockdiagramm einer Anordnung zur Auswertung von Beschleunigungssignalen des Beschleunigungssensors der Sensoranordnung.
- Figuren 7a, b:: Zeitdiagramme für ein Fahrprofil des Fahrzeugs gemäß Figur 1.
- Figuren 8a, b:: Zeitdiagramme für ein Fahrprofil des Fahrzeugs gemäß Figur 1 mit einer Kompensation von Offset-Fehlern.
- Figur 9:: Anordnung zur Bestimmung von Schock- und/oder Vibrationsdaten.
- Figur 10:: Darstellung von Beschleunigungen bei einer Kurvenfahrt eines Fahrzeugs.

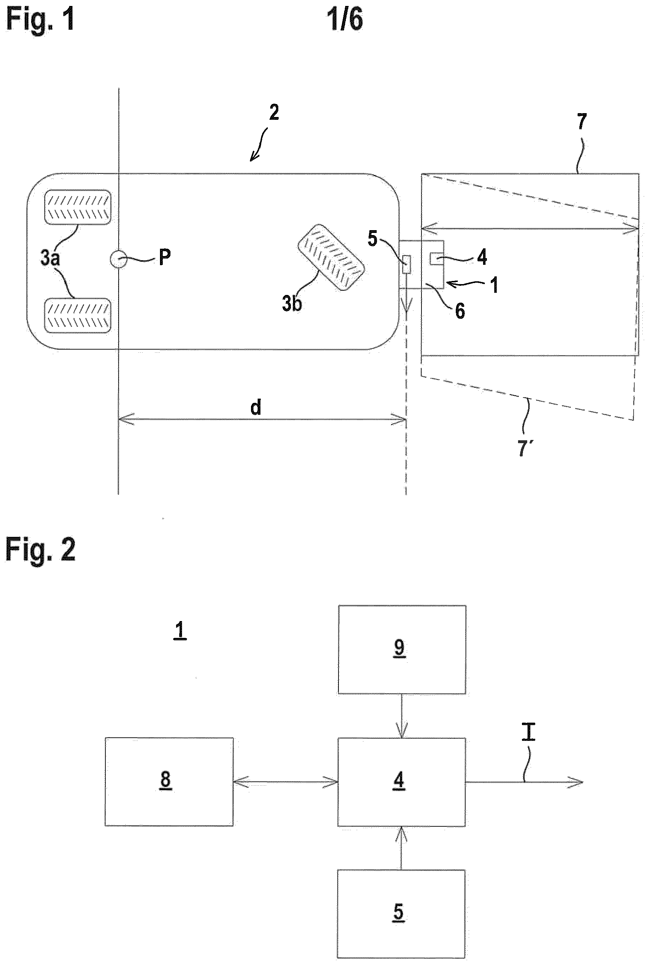

Figur 1 zeigt ein Ausführungsbeispiel der erfindungsgemäßen Sensoranordnung 1 an einem Fahrzeug 2, das beispielsweise von einem FTS gebildet sein kann.

Das Fahrzeug 2 weist im vorliegenden Fall zwei nicht gelenkte Räder 3a und ein gelenktes Rad 3b auf.

Die Sensoranordnung 1 weist einen Sicherheitsdistanzsensor 4 und einen Beschleunigungssensor 5 auf, die eine Baueinheit bilden, was jedoch nicht zwingend ist. Im vorliegenden Fall sind der Sicherheitsdistanzsensor 4 und der Beschleunigungssensor 5 in einem Sensorgehäuse 6 integriert.

In Figur 1 ist mit d der Abstand des Beschleunigungssensors 5 zum gedachten Drehpunkt P bei einer Kurvenfahrt des Fahrzeugs 2 bezeichnet.

Mit dem Sicherheitsdistanzsensor 4 erfolgt eine Schutzfeldüberwachung zur Absicherung des Vorfelds des Fahrzeugs 2. Figur 1 zeigt ein Schutzfeld 7, das bei einer Geradeausfahrt aktiviert ist. Bei einer Kurvenfahrt wird das Schutzfeld 7 derart an die Fahrbewegung angepasst, dass eine seitliche Schutzfeld-Korrektur T erfolgt (in Figur 1 gestrichelt dargestellt).

Figur 2 zeigt ein Blockschaltbild der Sensoranordnung 1 gemäß Figur 1. Die zentrale Komponente der Sensoranordnung 1 bildet der Sicherheitsdistanzsensor 4. In dem Sicherheitsdistanzsensor 4 werden Signale des Beschleunigungssensors 5 eingelesen. Zudem erfolgt ein bidirektionaler Datenaustausch mit einer Fahrzeugsteuerung 8. Gegebenenfalls werden Daten von zusätzlichen Sensoren 9 für Fahr- und Lenkbewegungen des Fahrzeugs 2 in den Sicherheitsdistanzsensor 4 eingelesen. Der bidirektionale Datenaustausch zwischen der Fahrzeugsteuerung 8 und dem Sicherheitsdistanzsensor 4 kann mit einer sicheren oder nichtsicheren Schnittstelle, wie z.B. einer Ethernet-Schnittstelle oder einem Bussystem, erfolgen.

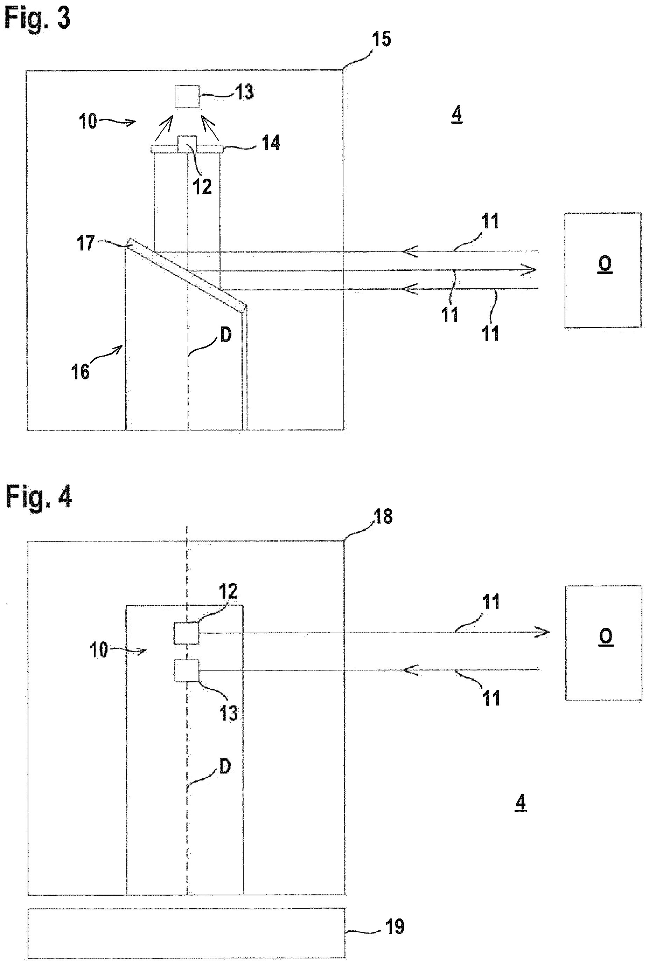

Figur 3 zeigt ein erstes Ausführungsbeispiel des Sicherheitsdistanzsensors 4 in Form eines optischen Sensors, der im vorliegenden Fall in Form eines Flächendistanzsensors ausgebildet ist.

Der optische Sensor weist mindestens eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt O zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor. Alternativ können Distanzmessungen nach einem Phasenmessverfahren durchgeführt werden.

Figur 4 zeigt eine zweite Ausführungsform des optischen Sensors. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich. Ansonsten entspricht der optische Sensor gemäß Figur 4 der Ausführungsform gemäß Figur 3.

Mit dem Sicherheitsdistanzsensor 4 in Form des Flächendistanzsensors wird ein zweidimensionaler Erfassungsbereich erfasst. Dementsprechend erfolgt mit dem Sicherheitsdistanzsensor 4 eine Schutzfeldüberwachung in zweidimensionalen Schutzfeldern 7.

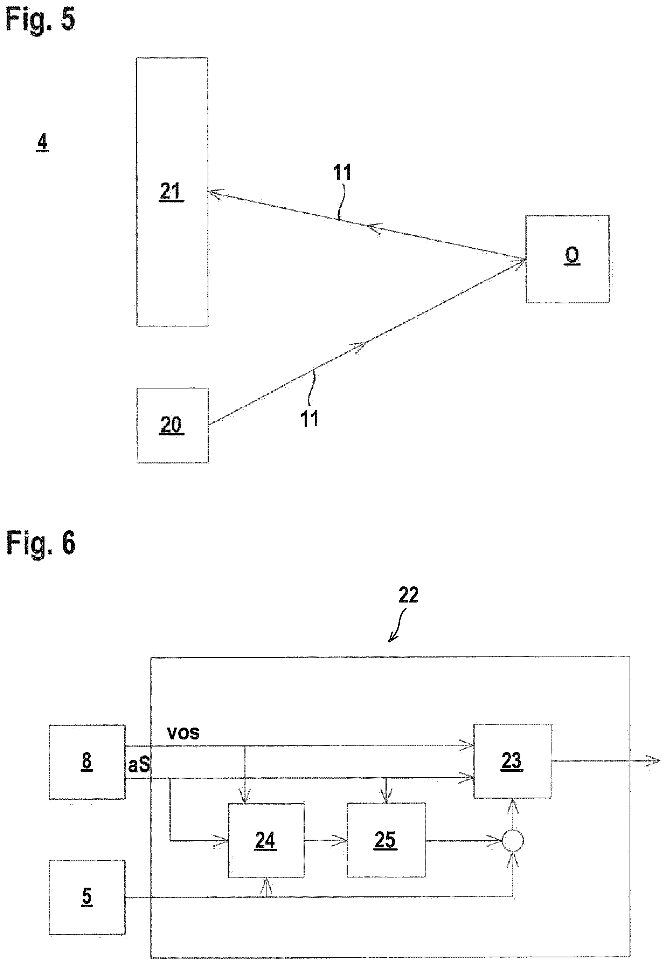

Figur 5 zeigt ein Ausführungsbeispiel des Sicherheitsdistanzsensors 4 in Form eines Kamerasensors. Dieser Kamerasensor weist eine Lichtstrahlen 11 emittierende Sendeeinheit 20 und eine Empfangseinheit 21 in Form eines Bildsensors mit einer matrixförmigen Anordnung von Empfangselementen auf. Der Bildsensor kann von einem CMOS- oder CCD-Array gebildet sein. Auch in diesem Fall erfolgt mit dem Lichtstrahl 11 eine Distanzmessung, insbesondere nach einem Impuls-Laufzeit-Verfahren.

Mit dem Kamerasensor erfolgt eine Objekterfassung in einem dreidimensionalen Erfassungsbereichs. Dementsprechend können die Schutzfelder 7 zwei- oder dreidimensionale Bereiche bilden.

Der Sicherheitsdistanzsensor 4 weist eine Auswerteeinheit auf, in welcher die Empfangssignale des Empfängers 13 bzw. der Empfangseinheit 21 ausgewertet werden. Die Auswerteeinheit weist einen fehlersicheren Aufbau auf. Beispielsweise besteht die Auswerteeinheit aus zwei sich gegenseitig zyklisch überwachenden Rechnereinheiten.

Mit dem Sicherheitsdistanzsensor 4 wird eine Schutzfeldüberwachung durchgeführt. Dabei wird mit dem Sicherheitsdistanzsensor 4 festgestellt, ob ein Objekt O, insbesondere ein sicherheitskritisches Objekt O, im Schutzfeld 7 vorhanden ist oder nicht. Abhängig hiervon generiert der Sicherheitsdistanzsensor 4 als Objektfeststellungssignal ein binäres Schaltsignal, dessen Schaltzustände angeben, ob sich ein Objekt O im Schutzfeld 7 befindet oder nicht. Wird mit dem Sicherheitsdistanzsensor 4 ein Objekt O im Schutzfeld 7 detektiert, entspricht dies einem Gefahrenzustand. Mit dem dadurch generierten Schaltsignal, dass über einen Ausgang des Sicherheitsdistanzsensor 4 ausgegeben wird (wie mit dem Pfeil I in Figur 2 veranschaulicht), wird eine Sicherheitsfunktion ausgelöst, die beispielsweise darin besteht, das Fahrzeug 2 anzuhalten.

Erfindungsgemäß erfolgt im Sicherheitsdistanzsensor 4 abhängig vom Bewegungszustand des Fahrzeugs 2 eine Schutzfeld-Umschaltung und damit eine Anpassung des Schutzfelds 7 an den aktuellen Bewegungszustand des Fahrzeugs 2.

Erfindungsgemäß wird der Bewegungszustand des Fahrzeugs 2 fortlaufend mit dem Beschleunigungssensor 5 erfasst.

Anhand von Beschleunigungssignalen des Beschleunigungssensors 5 und daraus abgeleiteter Größen, nämlich Geschwindigkeit, Wegstrecke und Bewegungsrichtung, wird die Vorgabe, d.h. Auswahl des aktuellen Schutzfelds 7 im Sicherheitsdistanzsensor 4 selbst vorgenommen.

Dabei kann im Sicherheitsdistanzsensor 4 das Schutzfeld 7 abhängig vom Bewegungszustand berechnet werden oder aus einer Tabelle, in der für unterschiedliche Bewegungszustände jeweils ein Schutzfeld 7 hinterlegt ist, ausgewählt werden.

Die Vorgabe neuer Schutzfelder 7 erfolgt zweckmäßig nicht fortlaufend, sondern nur wenn sich der Bewegungszustand des Fahrzeugs 2 signifikant geändert hat.

Vorteilhaft wird eine fehlersichere Vorgabe der Schutzfelder 7 dadurch erreicht, dass mit dem Beschleunigungssensor 5 ermittelte Beschleunigungssignale oder daraus abgeleitete Größen mit entsprechenden mit dem Sicherheitsdistanzsensor 4 oder Zusatzsensoren ermittelten Größen verifiziert werden.

Der Zusatzsensor kann z.B. von einem induktiven Sensor gebildet sein, der Nocken am Antrieb oder an der Lenkung des Fahrzeugs 2 erfasst.

Besonders vorteilhaft ist der Zusatzsensor 9 ein weiterer Beschleunigungssensor 5.

Figur 6 zeigt ein Blockdiagramm einer Anordnung 22 zur Auswertung von Beschleunigungssignalen des Beschleunigungssensors 5 der erfindungsgemäßen Sensoranordnung 1.

Die Anordnung 22 kann in einer dem Beschleunigungssensor 5 zugeordneten Rechnereinheit implementiert sein. Diese Anordnung 22 mit dem Beschleunigungssensor 5 bildet mit dem Sicherheitsdistanzsensor 4 im vorliegenden Fall eine Baueinheit. Generell können diese auch separate Einheiten bilden.

Die Anordnung 22 umfasst einen Integrator 23, in dem die Beschleunigungssignale des Beschleunigungssensors 5 integriert werden, wodurch die Geschwindigkeit des Fahrzeugs 2 ermittelt wird.

Bei dieser Integration ergibt sich eine Integrationskonstante und dadurch ein Offset-Fehler bei der Geschwindigkeitsbestimmung. Zur Kompensation dieses Offset-Fehlers weist die Anordnung 22 einen Hilfsintegrator 24 und ein Korrekturmodul 25 für eine Korrekturberechnung auf.

Die Beschleunigungssignale des Beschleunigungssensors 5 werden sowohl dem Integrator 23, als auch dem Hilfsintegrator 24 zugeführt. Von der Fahrzeugsteuerung 8 werden Signale vos und aS dem Integrator 23 und Hilfsintegrator 24 zugeführt, wobei vos Stillstandsphasen des Fahrzeugs 2 und aS Phasen konstanter Beschleunigungen des Fahrzeugs 2 sind.

Der Integrator 23 und der Hilfsintegrator 24 integrieren die eingelesenen Beschleunigungssignale.

Bei Phasen konstanter Geschwindigkeit des Fahrzeugs 2 wird der Hilfsintegrator 24 angehalten, bei Stillstand des Fahrzeugs 2 wird auch der Integrator 23 stillgesetzt. Im Hilfsintegrator 24 wird bei konstanter Geschwindigkeit des Fahrzeugs 2 der Offset aufintegriert. Am Ende der Phase konstanter Geschwindigkeit wird im Korrekturmodul 25 daraus ein Korrektur-Offset berechnet, mit dem die im Integrator 23 berechneten Geschwindigkeitswerte korrigiert werden.

Insbesondere kann die durch die Sicherheitsfunktion des Sicherheitsdistanzsensors 4 ausgelöste Abschaltung, d.h. Stillsetzung des Fahrzeugs 2 zur Offset-Korrektur verwendet werden. Dabei wird der Bremsvorgang des Fahrzeugs 2 abgewartet, bis dieses sicher angehalten ist.

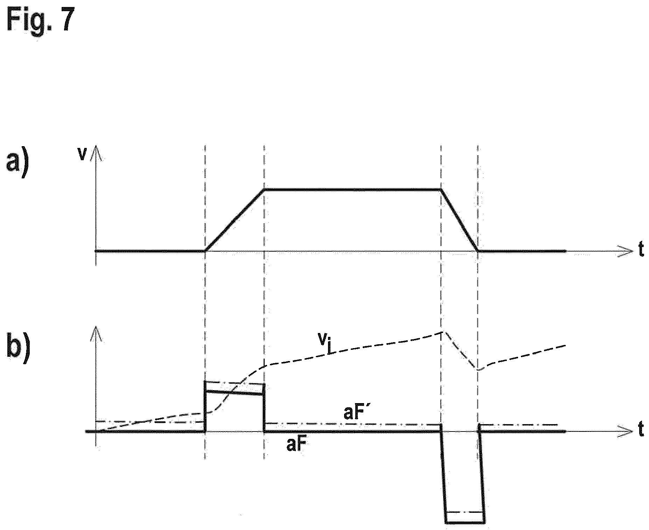

Die Figuren 7a und 7b zeigen Zeitdiagramme für ein typisches Fahrprofil des Fahrzeugs 2.

In Figur 7a ist die Geschwindigkeit v des Fahrzeugs 2 abhängig von der Zeit dargestellt.

Figur 7b zeigt den entsprechenden Verlauf der Beschleunigung des Fahrzeugs 2 abhängig von der Zeit.

Dabei ist mit aF die tatsächliche Beschleunigung dargestellt. Mit aF' ist der Verlauf der Beschleunigung mit Offset-Fehler dargestellt. Mit vᵢ ist der durch Integration der Beschleunigung aF' mit Offset-Fehler erhaltene Geschwindigkeitsverlauf dargestellt.

Wie der Vergleich der Figuren 7a und 7b zeigt, ergeben sich bei langen Integrationszeiten erhebliche Fehler bei der o.g. Bestimmung der Geschwindigkeit.

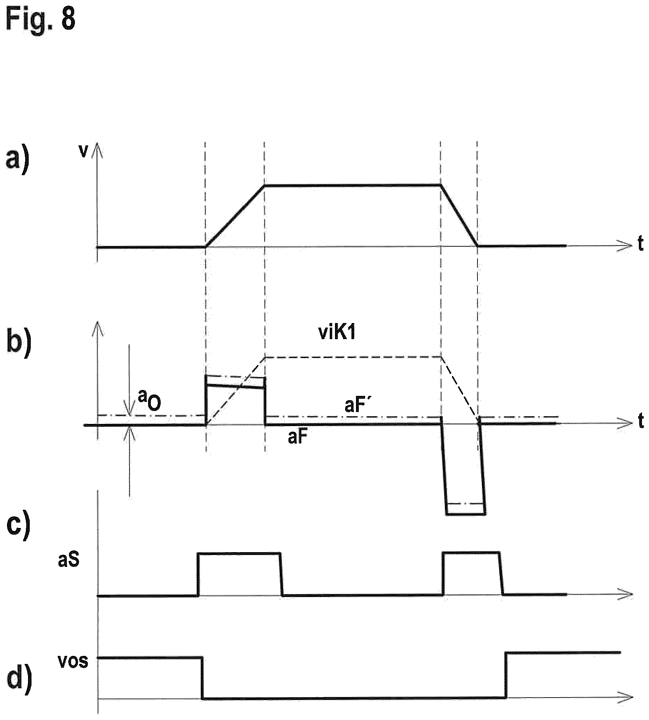

Die Figuren 8a bis 8d zeigen Zeitdiagramme, die die Kompensation von Offset-Fehlern bei der Bestimmung der Geschwindigkeit des Fahrzeugs 2 durch Integration der Beschleunigungssignale des Beschleunigungssensors 5 veranschaulichen.

Figur 8a entspricht Figur 7a.

Figur 8b zeigt wieder den Verlauf der Beschleunigung aF ohne Offset und der Beschleunigung aF' mit Offset, wobei der Offset mit ao bezeichnet ist.

Die Figuren 8c und 8d zeigen die zeitlichen Verläufe der Signale aS, vos, die von der Fahrzeugsteuerung 8 in die Anordnung 22 gemäß Figur 6 eingelesen werden.

Diese Signale werden zur Offset-Kompensation mittels des Hilfsintegrators 24 genutzt. Durch diese Offset-Kompensation wird mit der Anordnung 22 gemäß Figur 6 das Offset-kompensierte Geschwindigkeitssignal viK1 erhalten (Figur 8b), das dem tatsächlichen Geschwindigkeitsverlauf gemäß Figur 8a entspricht.

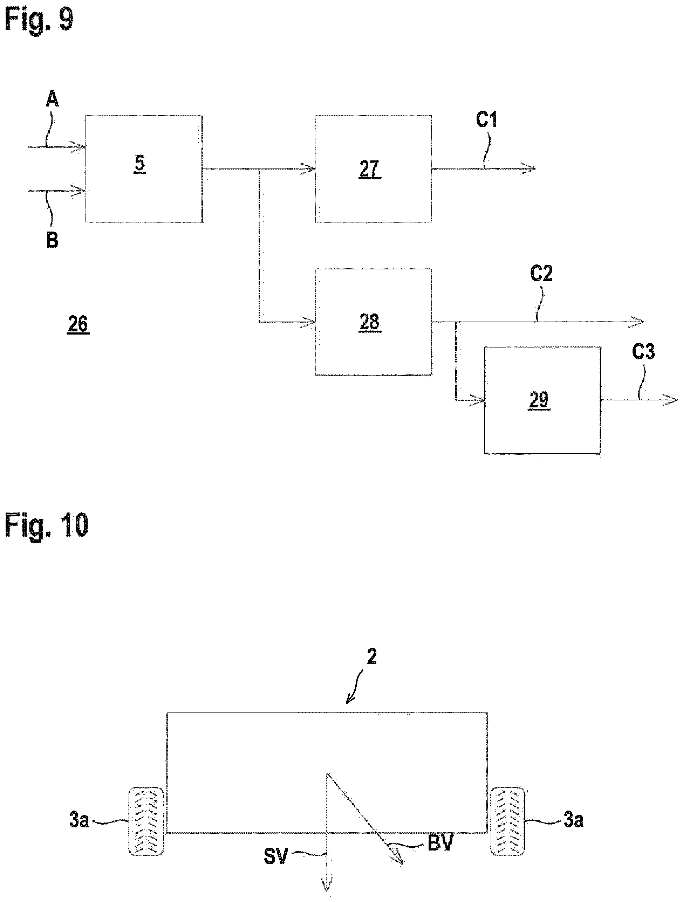

Figur 9 zeigt eine Schaltungsanordnung 26 zur Auswertung von Beschleunigungssignalen des Beschleunigungssensors 5. Der Beschleunigungssensor 5 generiert Beschleunigungssignale, die den wirksamen Schwerkraftvektoren A, sowie überlagerte Schock- und Vibrationsanteile B enthält.

Die Ausgangssignale des Beschleunigungssignals werden einem Tiefpass 27 und einem Hochpass 28 zugeführt.

Am Ausgang des Tiefpass 27 werden gemittelte Beschleunigungswerte C1 erhalten, in den die hochfrequenten Schock- und Vibrationsanteile B ausgefiltert sind.

Am Ausgang des Hochpass 28 werden nur hochfrequente Anteile des Beschleunigungssignals erhalten, die Schock- und Vibrationsdaten C2 bilden.

Durch eine Signalverarbeitungseinheit 29, die an einen Ausgang des Hochpass 28 anschließt, werden für die drei Raumrichtungen separate Frequenzanteile des Beschleunigungssignals, d.h. frequenz- und richtungsabhängige Vibrations- und Schocksignale C3 gewonnen, die zur Erkennung spezifischer Vibrationen dienen.

Vorteilhaft werden aus den Schock- und/oder Vibrationsdaten Kenngrößen für die bewegliche Einheit abgeleitet.

Bei einer beweglichen Einheit in Form eines Fahrzeugs 2 werden aus den Schock- und/oder Vibrationsdaten Informationen über die Bodenbeschaffenheit eines Bodens, auf dem das Fahrzeug 2 fährt, gewonnen und/oder Landmarken erkannt.

Die Landmarken können über die Kommunikationsschnittstelle einem Navigationssystem in der Fahrzeugsteuerung 8 zur Verfügung gestellt werden.

Die gemittelten Beschleunigungswerte C1 können für die Schutzfeld-Umschaltung genutzt werden.

Generell kann anhand von Beschleunigungssignalen des Beschleunigungssensors 5 oder daraus abgeleiteten Größen eine Montagekontrolle oder Verschleißkontrolle durchgeführt werden.

Insbesondere kann mit den Beschleunigungssignalen eine Lageerkennung des Sicherheitsdistanzsensors 4 mit dem Beschleunigungssensors 5 am Fahrzeug 2 kontrolliert werden.

Auch kann anhand von Beschleunigungssignalen eine Verschleißkontrolle von Fahrzeugkomponenten, insbesondere des Bremssystems, durchgeführt werden.

Schließlich ist es auch möglich, anhand plötzlich sich ändernder Beschleunigungssignale eine Kollisionserkennung des Fahrzeugs 2 durchzuführen.

Ebenso ist es möglich, dass anhand von Beschleunigungssignalen des Beschleunigungssensors 5 oder daraus abgeleiteten Größen Rampenfahrten der beweglichen Einheit erkannt und dadurch bedingte Schutzfeld-Verletzungen plausibilisiert werden.

Ist eine plötzliche Schutzfeld-Verletzung durch abrupte Änderungen der Beschleunigungssignale gegeben, wird dies im Sicherheitsdistanzsensor 4 als kurzfristige Störung erkannt und der Sicherheitsdistanzsensor 4 löst keine Sicherheitsfunktion aus.

Figur 10 zeigt das Fahrzeug 2 in einer Querschnittsdarstellung während einer Kurvenfahrt. Entsprechend der Kurvenfahrt weicht der aktuelle Beschleunigungsvektor BV, der im Beschleunigungssensor 5 bzw. der Schaltungsanordnung 26 ermittelt wird, vom Schwerkraftvektor SV ab. Daraus kann beispielsweise die Winkelgeschwindigkeit der Fahrzeugdrehung ermittelt werden.

### Bezugszeichenliste

- (1): Sensoranordnung
- (2): Fahrzeug
- (3a): nicht gelenktes Rad
- (3b): gelenktes Rad
- (4): Sicherheitsdistanzsensor
- (5): Beschleunigungssensor
- (6): Sensorgehäuse
- (7): Schutzfeld
- (7'): Schutzfeld-Korrektur
- (8): Fahrzeugsteuerung
- (9): Sensor
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel
- (20): Sendeeinheit
- (21): Empfangseinheit
- (22): Anordnung
- (23): Integrator
- (24): Hilfsintegrator
- (25): Korrekturmodul
- (26): Schaltungsanordnung
- (27): Tiefpass
- (28): Hochpass
- (29): Signalverarbeitungseinheit

- (A): Schwerkraftvektor
- (B): Schock- und Vibrationsanteil
- (C1): gemittelter Beschleunigungswert
- (C2): Schock- und Vibrationsdaten
- (C3): Vibrations- und Schocksignal
- (D): Drehachse
- (d): Abstand
- (O): Objekt
- (P): Drehpunkt

## Patentansprüche

1. Sensoranordnung (1) mit einem an einer beweglichen Einheit angeordneten Sicherheitsdistanzsensor (4), mittels dessen eine Schutzfeldüberwachung durchgeführt wird, **dadurch gekennzeichnet, dass** an der beweglichen Einheit ein Beschleunigungssensor (5) angeordnet ist, wobei abhängig von Beschleunigungssignalen des Beschleunigungssensors (5) oder daraus abgeleiteten Größen eine Vorgabe von Schutzfeldern (7) für die Schutzfeldüberwachung des Sicherheitsdistanzsensors (4) erfolgt und/oder eine Analyse oder Kontrolle der beweglichen Einheit durchgeführt wird.

2. Sensoranordnung (1) nach Anspruch 1, **dadurch gekennzeichnet, dass** die Vorgabe von Schutzfeldern (7) abhängig von aus Beschleunigungssignalen des Beschleunigungssensors (5) ermittelten Geschwindigkeiten, Bewegungsrichtungen oder Fahrwegen der beweglichen Einheit ermittelt werden.

3. Sensoranordnung (1) nach einem der Ansprüche 1 oder 2, **dadurch gekennzeichnet, dass** bei der Vorgabe von Schutzfeldern (7) mit dem Beschleunigungssensor (5) ermittelte Beschleunigungssignale oder daraus abgeleitete Größen mit entsprechenden mit dem Sicherheitsdistanzsensor (4) oder Zusatzsensoren ermittelten Größen verifiziert werden.

4. Sensoranordnung (1) nach einem der Ansprüche 1 bis 3, **dadurch gekennzeichnet, dass** der Sicherheitsdistanzsensor (4) ein Flächendistanzsensor oder ein Kamerasensor ist.

5. Sensoranordnung (1) nach einem der Ansprüche 1 bis 4, **dadurch gekennzeichnet, dass** das Schutzfeld (7) ein zwei- oder dreidimensionaler Bereich ist.

6. Sensoranordnung (1) nach einem der Ansprüche 1 bis 5, **dadurch gekennzeichnet, dass** die bewegliche Einheit ein bewegliches Maschinen- oder Anlagenteil oder ein Fahrzeug (2) ist.

7. Sensoranordnung (1) nach einem der Ansprüche 1 bis 6, **dadurch gekennzeichnet, dass** anhand der Beschleunigungssignale des Beschleunigungssensors (5) Schock- und/oder Vibrationsdaten (C2) der beweglichen Einheit ermittelt werden.

8. Sensoranordnung (1) nach Anspruch 7, **dadurch gekennzeichnet, dass** in den Beschleunigungssignalen enthaltene Schock- und/oder Vibrationsanteile (B) ausgefiltert werden.

9. Sensoranordnung (1) nach Anspruch 7, **dadurch gekennzeichnet, dass** aus den Schock- und/oder Vibrationsdaten (C2) Kenngrößen für die bewegliche Einheit abgeleitet werden.

10. Sensoranordnung (1) nach einem der Ansprüche 6 und 7, **dadurch gekennzeichnet, dass** bei einer beweglichen Einheit in Form eines Fahrzeugs (2) aus den Schock- und/oder Vibrationsdaten (C2) Informationen über die Bodenbeschaffenheit eines Bodens, auf dem das Fahrzeug (2) fährt, gewonnen werden und/oder Landmarken erkannt werden.

11. Sensoranordnung (1) nach einem der Ansprüche 1 bis 10, **dadurch gekennzeichnet, dass** anhand von Beschleunigungssignalen des Beschleunigungssensors (5) oder daraus abgeleiteten Größen eine Montagekontrolle oder Verschleißkontrolle durchgeführt wird.

12. Sensoranordnung (1) nach einem der Ansprüche 1 bis 11, **dadurch gekennzeichnet, dass** anhand von Beschleunigungssignalen des Beschleunigungssensors (5) oder daraus abgeleiteten Größen eine Kollisionserkennung für die bewegliche Einheit durchgeführt wird.

13. Sensoranordnung (1) nach einem der Ansprüche 1 bis 12, **dadurch gekennzeichnet, dass** anhand von Beschleunigungssignalen des Beschleunigungssensors (5) oder daraus abgeleiteten Größen Rampenfahrten der beweglichen Einheit erkannt und dadurch bedingte Schutzfeld-Verletzungen plausibilisiert werden.

14. Sensoranordnung (1) nach Anspruch 6, **dadurch gekennzeichnet, dass** bei einer als Fahrzeug (2) ausgebildeten beweglichen Einheit Beschleunigungssignale des Beschleunigungssensors (5) oder daraus abgeleitete Größen einem Navigationssystem zur Verfügung gestellt werden.

15. Sensoranordnung (1) nach einem der Ansprüche 1 bis 15, **dadurch gekennzeichnet, dass** ein zweiter Beschleunigungssensor (5) vorhanden ist, wobei dessen Beschleunigungssignale oder daraus abgeleitete Größen zur Plausibilisierung der Beschleunigungssignale oder daraus abgeleiteter Größen des ersten Beschleunigungssensors (5) verwendet werden.
